# EUROPEAN PATENT APPLICATION

(11) **EP 3 263 423 A1**
(43) Date of publication of application: **03.01.2018**
(21) Application number: 16780047.3
(22) Date of filing: 12.04.2016
(51) Int. Cl.: B62D 6/00, B62D 5/04, B62D 101/00, B62D 113/00, B62D 119/00

(54) **STEERING APPARATUS**

(30) Priority: 15.04.2015 JP 2015083624
(71) Applicant: NSK Ltd., Tokyo 141-8560 (JP)
(72) Inventor: SUGITA, Sumio, Fujisawa-shi Kanagawa 251-8501 (JP); MAEDA, Atsushi, Fujisawa-shi Kanagawa 251-8501 (JP); MITSUISHI, Nobuhiro, Maebashi-shi Gunma 371-8527 (JP)
(74) Representative: Rings, Rolf
(86) International application number: PCT/JP2016/061827
(87) International publication number: WO 2016/167256

(57) **Abstract**

To suppress the reaction force to be transmitted to the steering wheel by performing the automatic steering control. A steering device includes: a variable actuator (8) capable of changing an angle ratio between a steering angle of a steering wheel (1) and a turning angle of a turning wheel (13); a steering auxiliary mechanism (12) arranged between the variable actuator (8) and the turning wheel (13) to apply steering auxiliary force to a steering mechanism; a torque angle sensor (7) to detect steering torque to be inputted into the steering mechanism. Steering auxiliary control for drive-controlling the steering auxiliary mechanism (12) is performed such that the steering auxiliary force in accordance with the steering torque is generated, and, when an avoidance instruction is inputted, an automatic steering control is performed to drive-control the steering auxiliary mechanism (12) so as to run at the turning angle specified by steering position instruction to be inputted. The angle ratio of the variable actuator (8) is adjusted so as to suppress reaction force to be transmitted to the steering wheel (1) by performing the automatic steering control.

## Description

### Technical Field

The present invention relates to a steering device.

### Background Art

As a vehicle steering device including an electric power steering device, there is a technique disclosed in PTL 1, for example. In the technique, a steering mechanism includes a gear ratio variable mechanism capable of changing a relative relationship between a steering angle of a steering wheel and a turning angle of a turning wheel. The technique proposes active steering for changing a turning angle of a wheel through the gear ratio variable mechanism without depending on steering wheel operation, and control for controlling steering reaction force applied to a driver from a steering wheel through the electric power steering device when the active steering is executed.

Moreover, in PTL 2, for example, a driving support device that performs lane keep driving using a gear ratio variable mechanism and an electric power steering device is proposed.

### Citation List

### Patent Literature

PTL 1: JP 2005-153779 A
PTL 2: JP 2011-031769 A

### Summary of Invention

### Technical Problem

However, in the above-described vehicle steering device including the gear ratio variable mechanism and the electric power steering device, the active steering is configured to move the gear ratio variable mechanism actively, is consistently driver-centered, and is performed for the purpose of modifying driver's steering.

Thus, when automatic steering is performed using the vehicle steering device with turning control by the electric power steering device as a center, since a driver-centered vehicle steering device is used as a turning control-centered vehicle steering device, a method of compensating a feeling of strangeness provided for a driver when the active steering is executed is also different, and accordingly, a feeling of strangeness may be provided for a driver.

### Solution to Problem

According to an aspect of the present invention, there is provided a steering device including: an angle ratio variable mechanism arranged in a steering mechanism and capable of changing an angle ratio between a steering angle of a steering wheel and a turning angle of a turning wheel; a steering auxiliary mechanism arranged between the turning wheel and the angle ratio variable mechanism and configured to apply steering auxiliary force to the steering mechanism; a steering torque detection unit configured to detect steering torque to be inputted into the steering mechanism from the steering wheel; a steering auxiliary control unit configured to perform steering auxiliary control for drive-controlling the steering auxiliary mechanism such that the steering auxiliary force in accordance with the steering torque detected by the steering torque detection unit is generated, and configured to, when automatic steering is instructed, switch to automatic steering control for drive-controlling the steering auxiliary mechanism so as to run at the turning angle specified by target turning angle information to be inputted; and an angle ratio control unit configured to adjust the angle ratio so as to suppress reaction force to be transmitted to the steering wheel by performing the automatic steering control.

### Advantageous Effects of Invention

According to one mode of the present invention, since the angle ratio of the angle ratio variable mechanism is adjusted such that the reaction force to be transmitted to the steering wheel is suppressed in accordance with performing the automatic steering control, even when the turning angle is suddenly and largely controlled by the automatic steering control, for example, a feeling of strangeness provided for a driver, which is caused by transmission of the reaction force by the turning operation to the steering wheel, can be reduced.

### Brief Description of Drawings

FIG. 1 is an entire configuration diagram illustrating an example of a steering device in embodiments of the present invention;
FIG. 2 is a configuration diagram illustrating an example of an EPS-side controller;
FIG. 3 is an illustration diagram for describing a simplified physical model of a rack shaft and a control method of reaction force;
FIG. 4 is an example of a simulation result during obstacle avoidance;
FIG. 5 is an example of an assumed track of a vehicle during simulation; and
FIG. 6 is a flowchart illustrating an example of a processing procedure of the EPS-side controller.

### Description of Embodiments

Embodiments of the present invention will now be described on the basis of the drawings.

In the following description of the drawings, the same or similar portions are denoted by the same or similar reference numerals. It is to be noted that the drawings are schematic and a relation, a ratio, and the like of dimensions are different from actual ones.

In addition, the following embodiments exemplify devices and methods to embody the technical idea of the present invention, and the technical idea of the present invention does not limit the material, shape, structure, arrangement, and the like of a component to those described below. Various changes can be added to the technical idea of the present invention within the technical scope defined by claims.

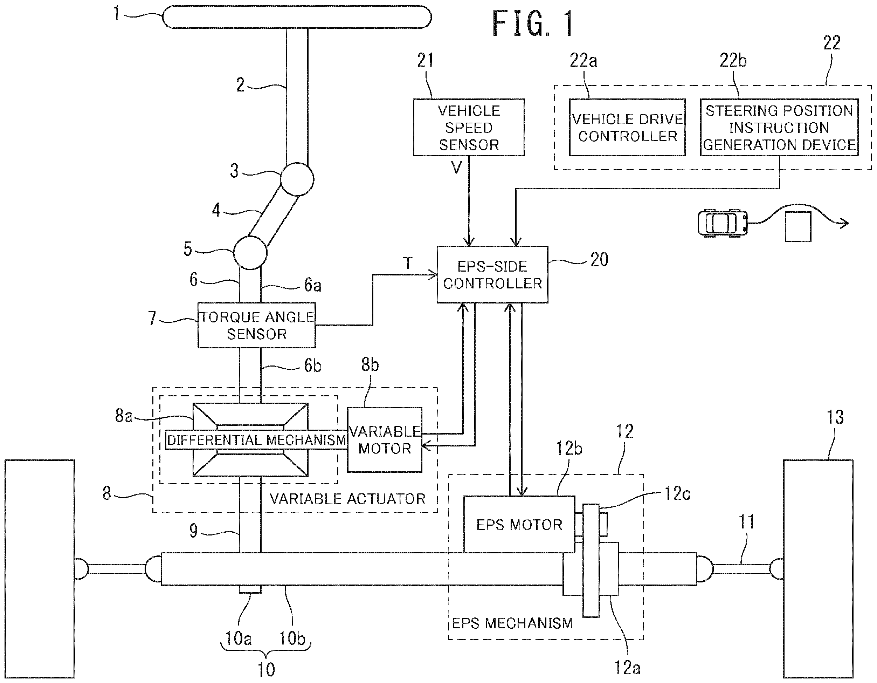

A steering device in one embodiment of the present invention is mounted on a vehicle, and includes, as a steering mechanism, a steering wheel 1, a first steering shaft 2, a universal joint 3, a second steering shaft 4, and a universal joint 5, as illustrated in FIG. 1. Furthermore, the steering device includes a third steering shaft 6, a torque angle sensor 7, a variable actuator 8, a pinion shaft 9, a steering gear 10, and a tie rod 11, and a steering auxiliary mechanism 12 configured to transmit steering auxiliary force to the steering gear 10 is connected to the steering gear 10.

Steering force applied to the steering wheel 1 from a driver is transmitted to the third steering shaft 6 through the first steering shaft 2, the universal joint 3, the second steering shaft 4, and the universal joint 5. As illustrated in FIG. 1, the third steering shaft 6 has an input shaft 6a and an output shaft 6b, one end of the input shaft 6a is connected to the universal joint 5, and the other end of the input shaft 6a is connected to one end of the output shaft 6b through the torque angle sensor 7.

The steering force transmitted to the output shaft 6b is transmitted to the pinion shaft 9 through the variable actuator 8. The steering force transmitted to the pinion shaft 9 is transmitted to the tie rod 11 through the steering gear 10 to turn a turning wheel 13.

Here, the torque angle sensor 7 is configured to detect steering torque which is applied to the steering wheel 1 and transmitted to the third steering shaft 6, and a rotation angle. From the viewpoint of making it easy to detect driver's intention to operate the steering wheel 1, the torque angle sensor 7 is arranged between the steering wheel 1 and the variable actuator 8.

Torque information T including the steering torque and the rotation angle detected by the torque angle sensor 7 is inputted into a controller 20 for electric power steering device control (hereinafter, also referred to as EPS-side controller) .

The variable actuator 8 includes a differential mechanism 8a and a variable motor 8b. The differential mechanism 8a is a mechanism configured to change a rotation angle difference between a rotation angle of the pinion shaft 9 and a rotation angle of the output shaft 6b. By rotating the variable motor 8b, the rotation angle difference is controlled, and a gear ratio of the differential mechanism 8a is controlled. Accordingly, the variable actuator 8 can behave in a way that an angle ratio between a steering angle of the steering wheel 1 and a turning angle is changed. Therefore, not only changing of the angle ratio but also intervening of active steering becomes possible.

The steering gear 10 is configured to have a rack and pinion type including a pinion gear 10a connected to the pinion shaft 9 and a rack shaft 10b to be engaged with the pinion gear 10a, and a rotational movement transmitted to the pinion gear 10a is converted into a linear movement by the rack shaft 10b.

The steering auxiliary mechanism 12 is connected to the rack shaft 10b, and includes a position adjustment mechanism 12a capable of performing a position adjustment of the rack shaft 10b in the axial direction and corresponding to a nut of a ball screw, an electric motor (hereinafter, referred to as EPS motor) 12b connected to the position adjustment mechanism 12a, and a belt power transmission mechanism 12c configured to transmit a rotational movement of the electric motor 12b to the nut of the position adjustment mechanism 12a. The rotational movement of the EPS motor 12b is transmitted to the position adjustment mechanism 12a through the power transmission mechanism 12c, and the transmitted rotational movement is converted into a linear movement of the rack shaft 10b by the position adjustment mechanism 12a, so that a relative position between the position adjustment mechanism 12a and the rack shaft 10b is changed, thereby changing the turning angle of the turning wheel. The EPS motor 12b is controlled by the EPS-side controller 20.

It is to be noted that, without limiting to the above-described steering auxiliary mechanism 12, a dual pinion or single pinion steering auxiliary mechanism can also be used, and can be applied as long as the steering auxiliary mechanism applies steering auxiliary force to a position nearer to tires than the variable actuator 8.

To the EPS-side controller 20, electricity is supplied from a battery which is not illustrated, and an ignition key signal is inputted through an ignition key which is not illustrated. When an avoidance instruction that instructs to execute automatic steering for obstacle avoidance is not inputted from a controller 22 for vehicle control (hereinafter, referred to as vehicle-side controller), the EPS-side controller 20 performs the same operation as that of a usual electric power steering device. More specifically, the EPS-side controller 20 performs steering auxiliary control for assisting driver's steering operation, and controls a current to be supplied to the EPS motor 12b on the basis of the torque information T detected by the torque angle sensor 7 and a vehicle speed V detected by a vehicle speed sensor 21. In addition, the EPS-side controller 20 controls the variable motor 8b depending on operation of the steering wheel 1 by a driver such that the rotation angle ratio (angle ratio) between the output shaft 6b and the pinion shaft 9 becomes an appropriate angle ratio in accordance with the steering torque and the vehicle speed V, and changes a ratio between the steering angle of the steering wheel 1 and the turning angle, so that stable running of a vehicle is achieved depending on the driver's steering operation.

In contrast, when the avoidance instruction is inputted from the vehicle-side controller 22, the EPS-side controller 20 receives a steering position instruction for performing position control of the rack shaft 10b inputted together with the avoidance instruction, drive-controls the EPS motor 12b and performs position control of the rack shaft 10b on the basis of the steering position instruction, so that obstacle avoidance is achieved by performing automatic steering regardless of operation of the steering wheel 1. In addition, when performing the obstacle avoidance, the EPS-side controller 20 changes the rotation angle difference between the rotation angle of the output shaft 6b and the rotation angle of the pinion shaft 9 by the variable motor 8b so as to suppress reaction force to be transmitted to the steering wheel 1 due to the automatic steering, and avoids transmission of large reaction force due to the automatic steering for obstacle avoidance to the driver. In other words, the EPS-side controller 20 is configured such that, when the avoidance instruction is inputted, the automatic steering for obstacle avoidance is performed using the steering auxiliary mechanism 12 used as an electric power steering device usually, and transmission of large reaction force due to the automatic steering for obstacle avoidance to the driver is avoided using the variable actuator 8 for realizing stable running of a vehicle usually.

The vehicle-side controller 22 includes a vehicle drive controller 22a and a steering position instruction generation unit 22b. The vehicle drive controller 22a determines the presence or absence of an obstacle around the own vehicle on the basis of external world information from various external world recognition sensors (not illustrated), such as a vehicle-mounted camera or a distance sensor, and outputs the avoidance instruction together with the external world information to the steering position instruction generation unit 22b when it is determined that avoidance operation by turning, which does not depend on the driver's steering operation, is required, for example, an obstacle suddenly rushes out, or the like.

When the avoidance instruction and the external world information are inputted, the steering position instruction generation unit 22b estimates a track of the own vehicle for avoiding the obstacle, on the basis of the external world information. Furthermore, the steering position instruction generation unit 22b sequentially updates and calculates an angle waveform indicating a changing situation of a rotation angle of the EPS motor 12b for turning control or a position waveform indicating a changing situation of a position of the rack shaft 10b in accordance with elapse of time for realizing the estimated track at appropriate time intervals a few seconds ahead. Then, the steering position instruction generation unit 22b outputs the calculated angle waveform of the EPS motor 12b or position waveform of the rack shaft 10b, i.e. a waveform of the turning angle required for avoiding the obstacle, as the steering position instruction, to the EPS-side controller 20 together with the avoidance instruction.

Next, a specific configuration of the EPS-side controller 20 will be described.

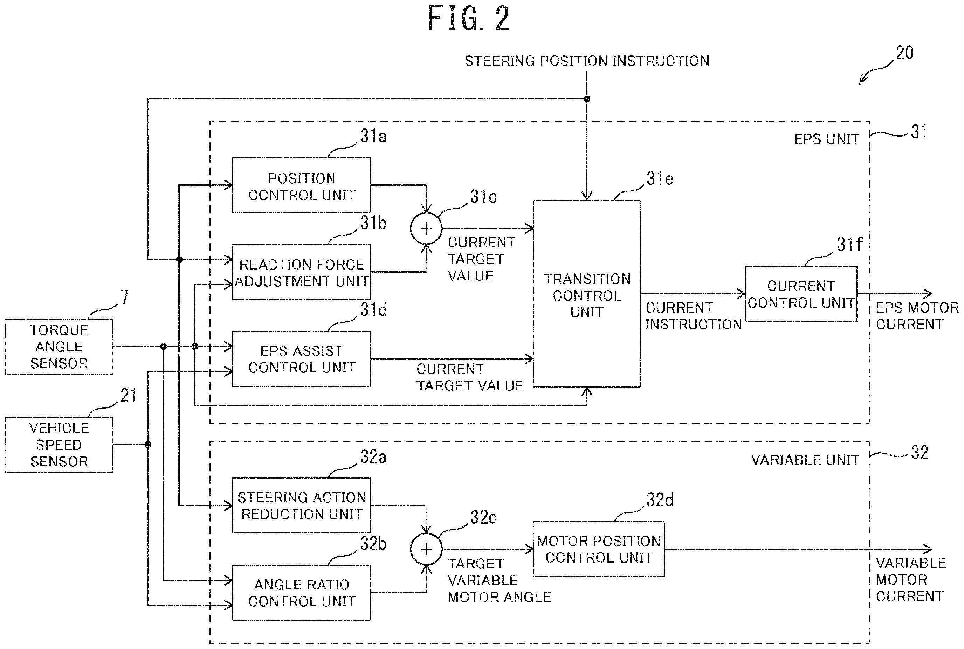

The EPS-side controller 20 includes, as illustrated in FIG. 2, a steering auxiliary control unit 31 (hereinafter, referred to as EPS unit) configured to drive-control the steering auxiliary mechanism 12 and a variable actuator control unit 32 (hereinafter, referred to as variable unit) configured to drive-control the variable actuator 8. The steering auxiliary mechanism 12 and the EPS unit 31 configure a so-called electric power steering device.

The EPS unit 31, the variable unit 32, and the vehicle drive controller 22a of the vehicle-side controller 22 can communicate with one another by CAN (Controller Area Network) communication. Steering information, such as various parameters (for example, a target current during normal time and a target current during avoidance described below) used for controlling the EPS motor 12b in the EPS unit 31 and, and various parameters (for example, a target variable motor angle during normal time and a target variable motor angle during avoidance described below) used for controlling the variable motor 8b in the variable unit 32 is sent to the vehicle drive controller 22a via the CAN communication.

The EPS unit 31 includes a position control unit 31a, a reaction force adjustment unit 31b, an addition unit 31c, an EPS assist control unit 31d, a transition control unit 31e, and a current control unit 31f.

The position control unit 31a is activated when the avoidance instruction is inputted, calculates a target current that changes the variable motor 8b by an angle waveform in accordance with the steering position instruction or a target current that changes the position of the rack shaft 10b by a position waveform in accordance with the steering position instruction, and outputs the calculated target current to the addition unit 31c.

The reaction force adjustment unit 31b is activated when the avoidance instruction is inputted, on the basis of the steering position instruction and the torque information T from the torque angle sensor 7, calculates a target current for suppressing reaction force that is predicted to be transmitted to the steering wheel 1 when controlling the EPS motor 12b on the basis of the steering position instruction by adjusting a controlled variable of the EPS motor 12b, and outputs the calculated target current to the addition unit 31c.

The addition unit 31c outputs the sum of the target current by the position control unit 31a and the target current by the reaction force adjustment unit 31b, as a current target value during avoidance, to the transition control unit 31e.

The EPS assist control unit 31d calculates a steering auxiliary instruction value for assisting the driver's steering operation on the basis of the torque information T from the torque angle sensor 7 and the vehicle speed V detected by the vehicle speed sensor 21, calculates a target current corresponding to the calculated steering auxiliary instruction value, and outputs the calculated target current, as a current target value during normal time, to the transition control unit 31e.

The transition control unit 31e receives the current target value during avoidance from the addition unit 31c and the current target value during normal time from the EPS assist control unit 31d, and selects the current target value during normal time when the avoidance instruction is not inputted from the steering position instruction generation unit 22b. When the avoidance instruction is inputted, the transition control unit 31e selects the current target value during avoidance until the automatic steering is avoided after that, and outputs the selected current target value, as a current instruction, to the current control unit 31f.

In addition, when it is determined that torque of a predetermined threshold value or more is inputted and angle change of a predetermined value or more is generated based on the torque information T from the torque angle sensor 7 in a state where the automatic steering is performed, in other words, when it is determined that the driver overrides the automatic steering, when the automatic steering is performed for predetermined time on the basis of a target position of the rack shaft 10b specified by the steering position instruction, or the like, the transition control unit 31e terminates the automatic steering. Then, the transition control unit 31e switches to selection of the current target value during normal time to switch to usual steering assist operation, and at this time, performs transition control so as to gradually switch to the usual steering assist operation. More specifically, the transition control unit 31e performs processing, such as controlling a supply current to the EPS motor 12b, such that a contribution rate of output of the EPS motor 12 for control of the turning angle of the turning wheel gradually becomes smaller from the 100% state.

It is to be noted that, although the override by the driver is detected on the basis of the torque information T from the torque angle sensor 7 here, without limiting thereto, for example, the override may be detected on the basis of angle change of the steering wheel 1 or the like, and any method may be used as long as the override can be detected.

The current control unit 31f controls the supply current to the EPS motor 12b such that a motor current detection value of the EPS motor 12b becomes the informed current target value during normal time or current target value during avoidance.

As described above, when the avoidance instruction is not inputted, the EPS unit 31 controls the steering auxiliary mechanism 12 in the same manner as a usual electric power steering device, and applies steering auxiliary force in accordance with the steering torque and the vehicle speed to the pinion gear 10a to perform steering auxiliary of the steering wheel 1 by the driver.

In contrast, when the avoidance instruction is inputted, the EPS unit 31 performs the automatic steering that automatically controls the turning angle of the turning wheel, so that the obstacle avoidance is automatically achieved by controlling the turning angle, and performs a reaction force adjustment such that the reaction force to be transmitted to the steering wheel 1 by performing the automatic steering is reduced to control the supply current to the EPS motor 12b. In other words, the control of the reaction force to be transmitted to the steering wheel 1 by performing the automatic steering is performed by the reaction force adjustment of the EPS unit 31 and control of the gear ratio of the differential mechanism 8a in the variable unit 32 described below, and the reaction force to be transmitted to the steering wheel 1 is kept appropriately while achieving convergence at the target position of the rack shaft 10b based on the steering position instruction.

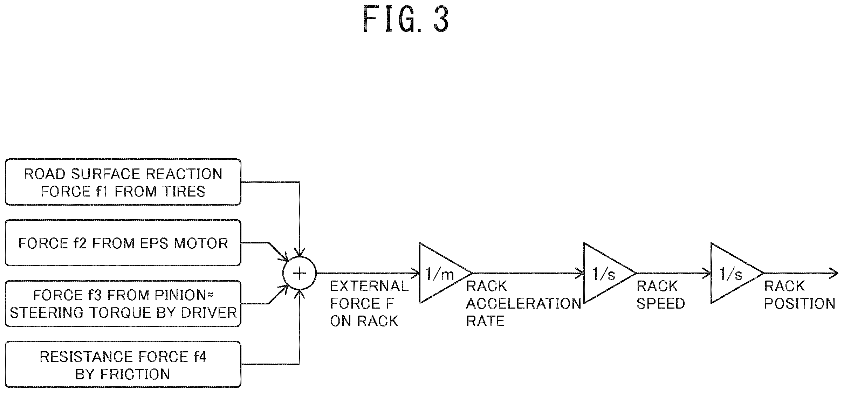

FIG. 3 is a diagram for describing a simplified physical model of the rack shaft 10b and a control method of the reaction force.

In the simplified physical model of the rack shaft 10b, external force F acting on the rack shaft 10b is the sum of road surface reaction force f1 from tires, steering auxiliary force f2 due to the position control of the rack shaft 10b by the EPS motor 12b, force f3 acting on the rack shaft 10b from the pinion shaft 9, and resistance force f4 by friction. In addition, the force f3 acting on the rack shaft 10b from the pinion shaft 9 can be considered equivalent to the steering torque applied by the driver.

A speed of the rack shaft 10b is obtained by integrating an acceleration rate of the rack shaft 10b obtained by dividing the external force F acting on the rack shaft 10b by mass m, and moreover, a position of the rack shaft 10b can be obtained by integrating the thus obtained speed of the rack shaft 10b.

Therefore, when the position of the rack shaft 10b is controlled, the sum of the force acting on the rack shaft 10b may be controlled as illustrated in FIG. 3, and thus, the steering torque applied by the driver can be adjusted by adjusting the magnitude of the steering auxiliary force f2 by the EPS motor 12b.

However, in a conventional steering device configured such that the steering angle of the steering wheel 1 and the turning angle of the turning wheel have a predetermined angle ratio α in accordance with the steering torque and the vehicle speed, the reaction force acting on the steering wheel 1 may not be arbitrarily controlled. For example, when the driver keeps steering of the steering wheel 1 and strongly resists against force acting on the steering wheel 1 by the automatic steering by the EPS motor 12b, the force acting on the steering wheel 1 directly acts on the driver as the reaction force.

Thus, the reaction force is appropriately set by the reaction force adjustment unit 31b while adjusting the rotation angle difference between the steering angle of the steering wheel 1 and the rotation angle of the pinion shaft 9 by the differential mechanism 8a. Accordingly, even when position control to move the rack shaft 10b strongly and rapidly is performed by the EPS motor 12b for avoidance operation, the steering angle of the steering wheel 1 and the reaction force to be transmitted to the steering wheel 1 can be kept at proper values.

The variable unit 32 includes a steering action reduction unit 32a, an angle ratio control unit 32b, an addition unit 32c, and a motor position control unit 32d.

The steering action reduction unit 32a is activated when the avoidance instruction is inputted from the steering position instruction generation unit 22b, and suppresses a movement of the steering wheel 1 on the basis of the steering position instruction inputted together with the avoidance instruction such that a variation of the steering wheel 1 during the automatic turning, i.e. an absolute value of a rotation speed does not become too large. For example, by controlling a rotation angle of the variable motor 8b such that a value of four-fifths of the turning angle when the EPS motor 12b is controlled depending on the steering position instruction is the rotation angle difference between the output shaft 6b and the pinion shaft 9, the movement of the steering wheel 1 is suppressed to one-fifth of the turning angle specified by the steering position instruction. It is to be noted that, when the avoidance instruction is not inputted, the steering action reduction unit 32a outputs zero.

The angle ratio control unit 32b calculates an angle ratio α indicating a relative relationship between the steering angle of the steering wheel 1 and the turning angle of the turning wheel on the basis of the torque information T from the torque angle sensor 7 and the vehicle speed V from the vehicle speed sensor 21. Then, the angle ratio control unit 32b calculates the rotation angle of the variable motor 8b that realizes the angle ratio α, and outputs this to the addition unit 32c.

The addition unit 32c adds the rotation angle calculated by the steering action reduction unit 32a and the rotation angle calculated by the angle ratio control unit 32b, and outputs the addition result, as a target variable motor angle, to the motor position control unit 32d.

In other words, when the avoidance instruction is not inputted, the variable unit 32 calculates the angle ratio α on the basis of the torque information T and the vehicle speed V, and controls the angle of the variable motor 8b of the variable actuator 8 as if the steering wheel 1 and the pinion shaft 9 were connected by the differential mechanism 8a having a gear ratio corresponding to the angle ratio α. In contrast, when the avoidance instruction is inputted, the variable unit 32 performs angle control of the variable motor 8b so as not to generate large reaction force, such as sudden rotation of the steering wheel 1 due to the automatic steering by the EPS unit 31 in accordance with the steering position instruction.

It is to be noted that the torque angle sensor 7 corresponds to a steering torque detection unit, the steering position instruction corresponds to target turning angle information, the EPS unit 31 corresponds to a steering auxiliary control unit, and the variable unit 32 corresponds to an angle ratio control unit.

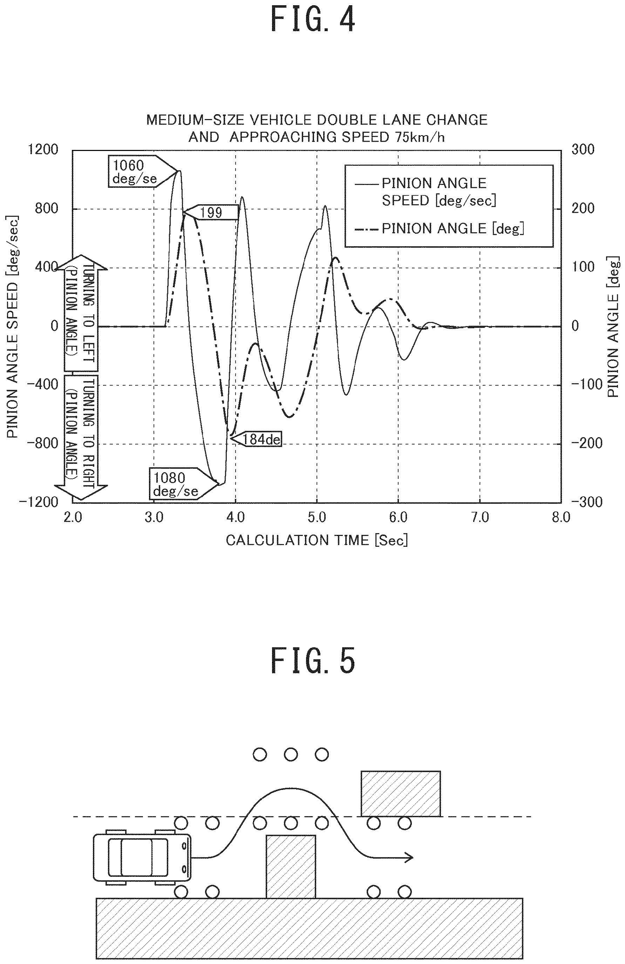

FIG. 4 is an example of a simulation result during obstacle avoidance, and indicates a pinion angle (indicated by dashed-dotted line) and a pinion angle speed (indicated by solid line) when double lane change is performed as illustrated in FIG. 5. The pinion angle represents a rotation angle of the pinion shaft 9, and the pinion angle speed represents a rotation speed of the pinion shaft 9.

As illustrated in FIG. 4, large and high-speed steering having a steering angle of ±180° or more and an absolute value of a steering speed of about 100 deg/s is required when the double lane change is performed.

In a usual electric power steering device, the rotation angle of the pinion shaft 9 is approximately the same as a rotation angle of the steering wheel 1, and steering operation almost illustrated in FIG. 4 is required so as to exit the double lane change.

It is difficult for the driver to perform such high-speed operation with a high degree of accuracy, and automatic avoidance operation is desired.

However, when such avoidance operation is performed by the automatic steering, grasping of the steering wheel 1 by the driver and the movement of the steering wheel 1 generated by the automatic steering act on the steering wheel 1, and a large movement is directly transmitted to the steering wheel 1. Therefore, the driver tries to keep steering of the steering wheel 1 against the movement of the steering wheel 1 generated by the automatic steering, and thus, a state where the turning wheel may not be sufficiently turned even when the automatic steering is performed may be caused, or an unintended movement of the driver, such as large rotation of the steering wheel 1, may provide a strong feeling of strangeness for the driver.

In the EPS-side controller 20 illustrated in FIG. 1, by performing an adjustment of the gear ratio of the differential mechanism 8a by the variable unit 32 together with the automatic steering by the EPS unit 31, the turning angle of the turning wheel is controlled to be an angle capable of avoiding an obstacle, and the reaction force generated in the steering wheel 1 due to change of the turning angle is suppressed, so that the obstacle avoidance can be surely performed, and a feeling of strangeness provided to the driver due to the reaction force transmitted to the steering wheel 1 by the automatic steering can be reduced. In particular, performing of the steering operation for obstacle avoidance automatically means a situation that requires quick avoidance steering, more specifically, is often accompanied by a high-speed side-to-side large turning angle variation. Since a strong feeling of strangeness or the like is provided for the driver as described above when such a large turning angle variation is directly transmitted to the steering wheel 1 as reaction force, it is effective to change an angle by the differential mechanism 8a and to perform a reaction force adjustment of the controlled variable of the EPS motor 12b to reduce the reaction force to be transmitted to the steering wheel 1.

In addition, the torque angle sensor 7 is arranged on the side nearer to the steering wheel 1 than the variable actuator 8, and thus, can output the torque information T reflecting the torque generated in the steering wheel 1 with a high degree of accuracy. Therefore, the control can be performed with a high degree of accuracy in the EPS unit 31 and the variable unit 32 on the basis of the torque information T reflecting driver's intention to steer.

Here, even if the torque angle sensor 7 is arranged on the side nearer to the turning wheel 13 than the variable actuator 8, there is no problem when the automatic steering for obstacle avoidance is not performed, that is, when the operation is performed as an operation of a usual electric power steering device. However, when the automatic steering for obstacle avoidance is performed, the variable actuator 8 is driven at a large angle speed, and rotating force in accordance with the driver's steering operation is not transmitted to the side nearer to the turning wheel 13 than the variable actuator 8. Thus, the torque angle sensor 7 needs to be provided on the side nearer to the steering wheel 1 than the variable actuator 8.

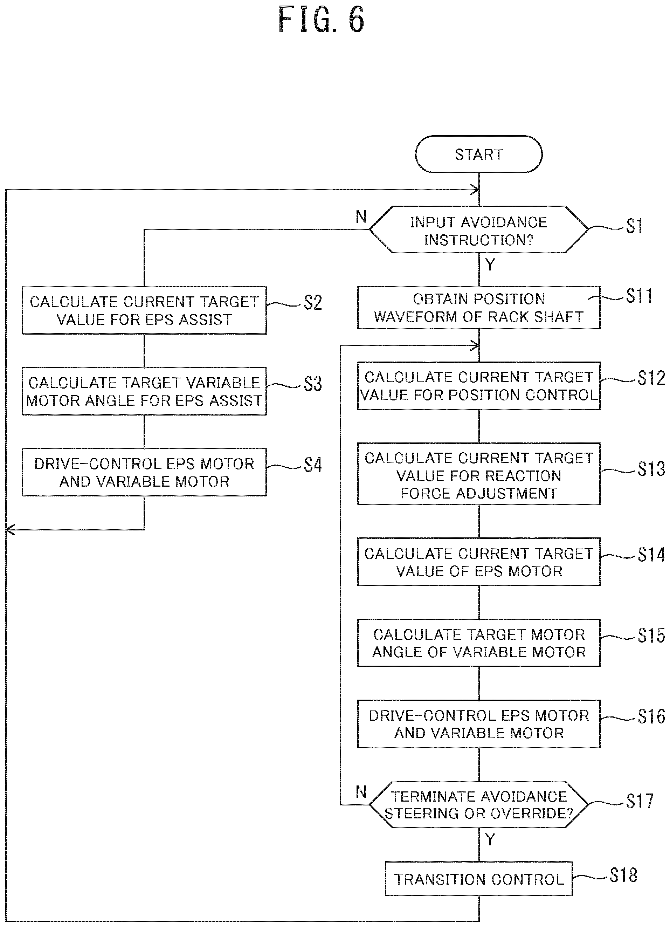

FIG. 6 is a flowchart illustrating an example of a processing procedure of the EPS-side controller 20.

First, the EPS-side controller 20 determines whether the avoidance instruction is inputted from the vehicle-side controller 22 (Step S1). Then, when the avoidance instruction is not inputted, the EPS-side controller 20 operates in the same manner as a usual electric power steering device, and the EPS unit 31 calculates a current target value for EPS assist, in accordance with the torque information T from the torque angle sensor 7 and the vehicle speed V from the vehicle speed sensor 21 (Step S2). In addition, the variable unit 32 calculates a target variable motor angle for realizing the gear ratio corresponding to the angle ratio α for EPS assist, in accordance with the torque information T from the torque angle sensor 7 and the vehicle speed V from the vehicle speed sensor 21 (Step S3).

Then, a supply current to the variable motor 8b and the EPS motor 12b is controlled depending on the calculated target current and motor angle, and the motors are driven. Accordingly, position control of the rack shaft 10b of the steering auxiliary mechanism 12 is performed, so that steering auxiliary force is applied and the angle ratio of the variable actuator 8 is controlled to correspond to α.

From this state, when an obstacle is detected and it is determined that obstacle avoidance by automatic steering is required on the basis of information of an external world recognition sensor or the like in the vehicle drive controller 22a of the vehicle-side controller 22, the steering position instruction generation unit 22b estimates a track of the own vehicle for avoiding the obstacle. Furthermore, the steering position instruction generation unit 22b calculates an angle waveform indicating a changing situation of the EPS motor 12b for turning control or a position waveform indicating a changing situation of a position of the rack shaft 10b with elapse of time for realizing the estimated track, as a steering position instruction, and outputs the steering position instruction to the EPS-side controller 20 together with the avoidance instruction.

In the EPS-side controller 20, when the avoidance instruction is inputted, the processing proceeds from Step S1 to Step S11, and a position waveform of the rack shaft 10b for running along the track of the own vehicle for avoiding the obstacle is obtained on the basis of the steering position instruction.

Then, in the EPS-side controller 20, a current target value for performing the position control of the rack shaft 10b along the position waveform of the rack shaft 10b is calculated (Step S12), and a current target value for a reaction force adjustment for suppressing the reaction force to be transmitted to the steering wheel 1 by performing the position control of the rack shaft 10b along the position waveform of the rack shaft 10b is calculated (Step S13). Then, the sum of the current target values is set as a current target value of the EPS motor 12b (Step S14).

Furthermore, a target variable motor angle of the variable actuator 8 is calculated so as to suppress the reaction force to be transmitted to the steering wheel 1 along with the reaction force adjustment (Step S15), and the EPS motor 12b and the variable motor 8b are drive-controlled on the basis of them (Step S16).

Accordingly, the vehicle runs so as to avoid the obstacle by the automatic steering, and even if the turning angle is controlled relatively largely by the automatic steering at this time, the EPS motor 12b is driven by the reaction force adjustment along with performing the adjustment of the differential mechanism 8a, and thus, transmission of large reaction force to the steering wheel 1 is suppressed.

When the driver overrides the automatic steering so as to avoid the obstacle during the automatic steering, or when the automatic steering for obstacle avoidance for predetermined time is terminated, the processing proceeds from Step S17 to Step S18, the transition control for making a transition from the automatic steering to turning by the driver's steering operation is executed, and the transition from the automatic steering to turning by the steering operation is gradually made.

Then, the processing proceeds from Step S1 to Step S2, and the steering assist of the driver's steering operation is performed in the same manner as a usual electric power steering device.

Although the present invention has been described above with reference to the specific embodiments, the invention is not limited by the description. By referring to the description of the present invention, various modifications of the disclosed embodiments and other embodiments of the present invention are apparent to those skilled in the art. Therefore, it should be understood that claims cover those modifications or embodiments included in the scope and sprit of the present invention.

### Reference Signs List

1 Steering wheel
6 Steering shaft
7 Torque angle sensor (Steering torque detection unit)
8 Variable actuator
8a Differential mechanism (Angle ratio variable mechanism)
8b Variable motor
9 Pinion shaft
10 Steering gear
12 Steering auxiliary mechanism
12a Position adjustment mechanism
12b Electric motor (EPS motor)
20 Controller for electric power steering device control (EPS-side controller)
21 Vehicle speed sensor
22 Controller for vehicle control (Vehicle-side controller)
22a Vehicle drive controller
22b Steering position instruction generation unit
31 Steering auxiliary control unit (EPS unit) (Steering auxiliary control unit)
32 Variable actuator control unit (Variable unit)

## Claims

1. A steering device comprising:
an angle ratio variable mechanism arranged in a steering mechanism and capable of changing an angle ratio between a steering angle of a steering wheel and a turning angle of a turning wheel;
a steering auxiliary mechanism arranged between the turning wheel and the angle ratio variable mechanism and configured to apply steering auxiliary force to the steering mechanism;
a steering torque detection unit configured to detect steering torque to be inputted into the steering mechanism from the steering wheel;
a steering auxiliary control unit configured to perform steering auxiliary control for drive-controlling the steering auxiliary mechanism such that the steering auxiliary force in accordance with the steering torque detected by the steering torque detection unit is generated, and configured to, when automatic steering is instructed, switch to automatic steering control for drive-controlling the steering auxiliary mechanism so as to run at the turning angle specified by target turning angle information to be inputted; and
an angle ratio control unit configured to adjust the angle ratio so as to suppress reaction force to be transmitted to the steering wheel by performing the automatic steering control.

2. The steering device according to claim 1, wherein
the steering auxiliary control unit includes a reaction force adjustment unit configured to adjust a controlled variable in the automatic steering control so as to suppress the reaction force to be transmitted to the steering wheel by performing the automatic steering control.

3. The steering device according to claim 1 or 2, wherein
the automatic steering is instructed when steering operation for obstacle avoidance is needed, and
the steering auxiliary control unit is configured to perform automatic steering for the obstacle avoidance in accordance with the target turning angle information.

4. The steering device according to any one of claims 1 to 3, wherein
the steering auxiliary control unit switches to the steering auxiliary control from the automatic steering control when it is determined that the steering wheel is operated.

5. The steering device according to claim 4, wherein
the steering auxiliary control unit performs transition control to gradually switch to the steering auxiliary control from the automatic steering control when the steering auxiliary control is switched from the automatic steering control.

6. The steering device according to any one of claims 1 to 5, wherein
the steering torque detection unit is arranged between the steering wheel and the angle ratio variable mechanism, in the steering mechanism.
